# EUROPÄISCHE PATENTSCHRIFT

(11) **EP 2 820 729 B1**
(45) Veröffentlichungstag und Bekanntmachung des Hinweises auf die Patenterteilung: **23.12.2015**
(21) Anmeldenummer: 13711303.1
(22) Anmeldetag: 26.02.2013
(51) Int. Cl.: H02B 1/38, E05B 53/00, E05B 63/14, E05C 3/10, H02B 11/12

(54) **SCHALTSCHRANKTÜR**
SWITCH CABINET DOOR
PORTE D'ARMOIRE DE COMMANDE

(30) Priorität: 29.02.2012 AT 2592012
(43) Veröffentlichungstag der Anmeldung: 07.01.2015
(73) Patentinhaber: Eaton Industries (Austria) GmbH, 3931 Schrems (AT)
(72) Erfinder: BLIEMEL, Christoph, A-3862 Eisgarn (AT)
(74) Vertreter: Eaton IP Group EMEA
(86) Internationale Anmeldenummer: PCT/EP2013/053827
(87) Internationale Veröffentlichungsnummer: WO 2013/127798

(56) Entgegenhaltungen:
- WO-A1-2009/057529
- JP-U- S52 117 230
- JP-U- S62 202 005
- US-A- 3 075 061

## Beschreibung

Die Erfindung betrifft eine Schaltschranktür gemäß dem Oberbegriff des Patentanspruches 1.

Schaltgeräte werden oftmals in Schaltschränken angeordnet, welche durch entsprechende Schaltschranktüren verschlossen sind. Ja nach Art des Schaltgeräts bzw. des Schaltschrankes weist die Schaltschranktür eine Öffnung auf, durch welche eine Bedienung eines in dem Schaltschrank angeordneten Schaltgeräts ermöglicht wird. Dabei ist in der Regel vorgesehen, dass innerhalb der Schaltschranktür ein Rahmen angeordnet ist, mit welchem der Bereich zwischen der Schaltschranktür und dem Schalter seitlich angeschlossen wird.

Es sind Leistungsschalter bekannt, welche innerhalb eines Schaltschrankes auf Schienen bzw. Stangen translatorisch verschiebbar angeordnet sind, insbesondere aufgrund deren erheblicher Baugröße und Gewicht. Üblich ist dabei etwa, dass der Schalter in drei Stellungen, welche sich durch jeweils unterschiedlichem Abstand des Schalters gegenüber der Schaltschranktür bzw. einer Rückwand des Schaltschranks unterscheiden, angeordnet werden kann: Eingefahren, Testposition, Ausgefahren. Von den drei Positionen weist der Schalter dabei in der Position Eingefahren den größten Abstand zur Schaltschranktür auf, und in der Position Ausgefahren den geringsten.

Bei bekannten Schaltschranktüren mit Öffnung und Rahmen ist es zwar oftmals möglich, dass der Schalter bei geschlossener Schaltschranktür in besagten drei Stellungen angeordnet werden kann, jedoch ist das Öffnen der Schaltschranktür nur in der Position Eingefahren möglich. Dies wirkt sich insbesondere bei Servicearbeiten negativ aus. Neben dem zusätzlich erforderlichen Schritt den betreffenden Schalter wiederum in die Position Eingefahren zu verschieben, ist dies für nicht unmittelbar mit derartigen Schaltschranktüren vertrauten Technikern nicht unmittelbar erkennbar, dass die Position des Schalters die Ursache für die sich nicht Öffnen lassende Tür darstellt. Weiters stellt dies ein Sicherheitsrisiko dar, da der betreffenden Schalter bei derartigen Schaltschranktüren bei geöffneter Tür in die Position Eingefahren verbracht werden muss, und dadurch mit den Leitern kontaktiert wird, während die Schaltschranktür noch immer geöffnet ist. Da betreffende Schalter für hohe Spannungen und hohe Stromstärken vorgesehen sein können, werden die notwendigen Sicherheitsabstände von beteiligten Personen oftmals unterschätzt.

Die US 3 075 061 beschreibt eine Schaltschranktür mit einem Innenrahmen an der Ausnehmung, wobei der Rahmen beweglich ist, und von Federn in eine Position gedrückt wird. Der Rahmen weist Abschrägungen auf, wodurch die einzelnen Rahmenteile bei Kontakt mit einem Schalter gegen die Federkraft verschoben werden, und derart an dem Schalter anliegen und den Raum herum begrenzen.

Aufgabe der Erfindung ist es daher eine Schaltschranktür der eingangs genannten Art anzugeben, mit welcher die genannten Nachteile vermieden werden können, und welche unabhängig von der Position des Schalters geöffnet und geschlossen werden kann.

Erfindungsgemäß wird dies durch die Merkmale des Patentanspruches 1 erreicht.

Dadurch kann die Schaltschranktür unabhängig von der Position des Schalters geöffnet und geschlossen werden. Dadurch kann der Schalter bei bereits geschlossener Schaltschranktür von der Position Ausgefahren in die Position Eingefahren verbracht werden. Dadurch können Komplikationen bei Servicearbeiten vermieden werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen eine lediglich bevorzugte Ausführungsform beispielhaft dargestellt ist, näher beschrieben. Dabei zeigt:
Fig. 1 eine Innenansicht einer bevorzugten Ausführungsform einer Schaltschranktür zusammen mit einem Schalter in Rückansicht in axonometrischer Darstellung;
Fig. 2 die Schaltschranktür gemäß Fig. 1 in axonometrischer Innenansicht mit dem Verriegelungsmechanismus in Verriegelungsposition;
Fig. 3 Detail A aus Fig. 2;
Fig. 4 Detail B aus Fig. 2;
Fig. 5 die Schaltschranktür gemäß Fig. 1 in axonometrischer Innenansicht mit dem Verriegelungsmechanismus in Öffnungsposition
Fig. 6 Detail C aus Fig. 5; und
Fig. 7 Detail D aus Fig. 5.

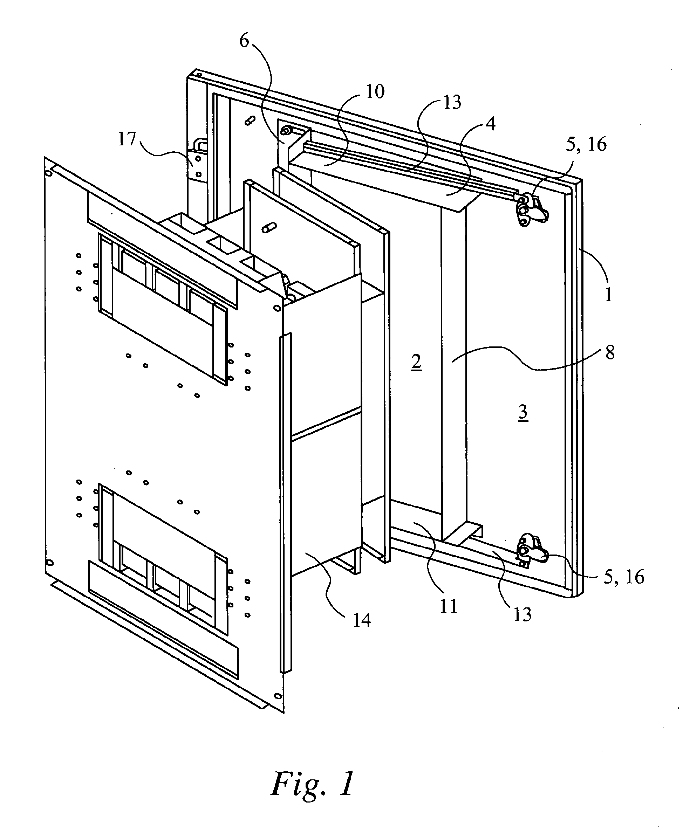

Die Fig. 1, 2 und 5 zeigen eine Schaltschranktür 1, welche eine Öffnung 2 aufweist, wobei die Öffnung 2 an einer Innenseite 3 der Schaltschranktür 1 von einem, aus Rahmenwänden 6, 8, 10, 11 gebildeten, Rahmen 4 umrandet ist, wobei die Schaltschranktür 1 weiters einen Verriegelungsmechanismus 5 aufweist, wobei bei Anordnung des Verriegelungsmechanismus 5 in einer Verriegelungsposition eine erste Rahmenwand 6 einen ersten Abstand 7 zu einer gegenüberliegend zu dieser angeordneten zweiten Rahmenwand 8 aufweist, wobei bei Anordnung des Verriegelungsmechanismus 5 in einer Öffnungsposition die erste Rahmenwand 6 einen zweiten Abstand 9 zu der zweiten Rahmenwand 8 aufweist, und wobei der zweite Abstand 9 größer ist als der erste Abstand 7.

Dadurch kann die Schaltschranktür 1 unabhängig von der Position des Schalters 14 geöffnet und geschlossen werden. Dadurch kann der Schalter 14 bei bereits geschlossener Schaltschranktür 1 von der Position Ausgefahren in die Position Eingefahren verbracht werden. Dadurch können Komplikationen bei Servicearbeiten vermieden werden.

Eine Schaltschranktür 1 bezeichnet eine Tür, welche dazu vorgesehen ist einen Schrank oder Kasten zu verschließen, welcher dazu bestimmt ist elektrische Baugruppe, wie insbesondere Schutzschalter, Leistungsschalter und dergleichen aufzunehmen. Insbesondere zur Aufnahme großer Leistungsschalter für Ströme zwischen einigen hundert bis ca. 1500 A.

Fig. 1 zeigt eine Anordnung aus einem entsprechenden Schalter 14 und einer teilweise geöffneten Schaltschranktür 1, wobei der Schalter 14 von hinten dargestellt ist und keine weiteren Teile eines Schaltschrankes dargestellt sind. Der Schalter 14 und die Schaltschranktür 1 sind daher in deren Lage relativ zueinander dargestellt, welche diese bei Vorhandensein des nicht dargestellten Schaltschrankes einnehmen.

Die gegenständliche Schaltschranktür 1 ist als Tür ausgebildet, welche zur drehbeweglichen bzw. schwenkbeweglichen Anordnung an einem Schaltschrank bzw. einem Türrahmen eines Schaltschrankes vorgesehen ist. Bevorzugt weist die Schaltschranktür 1 entsprechende Scharniere 17 oder Türbänder oder Teile solcher auf, und/oder eine entsprechende Scharnieraufnahme 12.

Die Schaltschranktür 1 weist einen Verriegelungsmechanismus 5 auf, welcher wenigstens zwei Stellungen bzw. Positionen aufweist bzw. einnehmen kann: eine Verriegelungsposition, in welcher eine mechanische Verrieglung der Schaltschranktür 1 mit einem Schaltschrank hergestellt werden kann, sowie eine Öffnungsposition, in welcher keine entsprechende mechanische Verrieglung herstellbar ist, und welche ein Öffnen bzw. ein Bewegen der Schaltschranktür 1 gegenüber einem Schaltschrank, an welchem die Schaltschranktür 1 schwenkbar angeordnet ist, ermöglicht.

Bevorzugt ist vorgesehen, dass der Verriegelungsmechanismus 5 umfassend wenigstens einem Drehriegel 16 oder Schubriegel ausgebildet ist. Die dargestellte bevorzugte Ausführungsform weist zwei Drehriegel 16 auf.

Die Schaltschranktür 1 weist eine Öffnung 2 auf, welche auch als Fenster bezeichnet werden kann, und durch welche Zugang zu den Bedienelementen eines im Schaltschrank angeordneten Schalters 14 gewährt wird. Bevorzugt ist die Öffnung 2 im Wesentlichen mittig an der Schaltschranktür 1 angeordnet. Wie bei der dargestellten bevorzugten Ausführungsform, kann bevorzugt vorgesehen sein, dass die Öffnung 2 einen großen Teil der Grundfläche der Schaltschranktür 1 einnimmt, insbesondere zwischen 25% und 75% der Grundfläche der Schaltschranktür 1. Die Schaltschranktür 1 kann auch eine Mehrzahl an Öffnungen 2 aufweisen.

Die Öffnung 2 ist an einer Innenseite 3 der Schaltschranktür 1 von einem Rahmen 4 umrandet. Der Rahmen 4 bildet dabei eine Einfassung in Form einer Zarge oder eines Schachts, und ist aus Rahmenwänden 6, 8, 10, 11 aufgebaut und an der Innenseite 3 der Schaltschranktür 1 angeordnet.

Dabei kann vorgesehen sein, dass der Rahmen 4 bündig an die Öffnung 2 anschließen ausgebildet ist, es kann aber auch vorgesehen sein, dass der Rahmen 4 eine größere Grundfläche als die Öffnung 2 aufspannt und die Öffnung 2 an der Innenseite 3 der Schaltschranktür 1 einfasst, wobei zwischen den Rahmenwänden 6, 8, 10, 11 und der Öffnung 2 ein Zwischenraum frei bleiben kann.

Es kann vorgesehen sein, dass die einzelnen Rahmenwände 6, 8, 10, 11 nicht miteinander verbunden sind, und lediglich aneinander anliegend angeordnet sind. Es kann aber auch vorgesehen sein, dass zwei oder drei der Rahmenwände 8, 10, 11 miteinander verbunden sind. Bevorzugt sind die Rahmenwände 6, 8, 10, 11 jeweils als Metallwinkel bzw- L-Profile ausgebildet.

Es ist vorgesehen, dass bei Anordnung des Verriegelungsmechanismus 5 in der Verriegelungsposition eine erste Rahmenwand 6 einen ersten Abstand 7 zu einer gegenüberliegend zu dieser angeordneten zweiten Rahmenwand 8 aufweist, dass bei Anordnung des Verriegelungsmechanismus 5 in der Öffnungsposition die erste Rahmenwand 6 einen zweiten Abstand 9 zu der zweiten Rahmenwand 8 aufweist, und dass der zweite Abstand 9 größer ist als der erste Abstand 7.

Daher, dass die erste Rahmenwand 6 in bestimmter Weise verschiebbar bzw. bewegbar ist, in Abhängigkeit der Stellung des Verriegelungsmechanismus 5.

Der erste und der zweite Abstand 7, 9 werden dabei bevorzugt entlang derselben Linie gemessen. Sofern die erste und die zweite Rahmenwand 6, 8 parallel angeordnet sind, handelt es sich jeweils um einen Normalabstand. Bei nicht parallelen Rahmenwänden, ist bevorzugt vorgesehen eine Veränderung des Minimalabstands zwischen zwei einander gegenüber angeordneter Rahmenwände zu bestimmen, welcher sich Vergrößert zwischen der Stellung des Verriegelungsmechanismus 5 in der Verriegelungsposition und der Stellung des Verriegelungsmechanismus 5 in der Öffnungsposition. Daher ist bevorzugt vorgesehen den ersten Abstand 7 als Minimalabstand in dieser Anordnung zu ermitteln, sowie einen Verlauf des betreffenden Abstandes analog der Wirkungslinie eines Vektors. Dann ist der Verriegelungsmechanismus 5 in die Öffnungsposition zu verbringen und der zweite Abstand 9 entlang des Verlaufs bzw. der "Wirkungslinie" des ersten Abstandes 7 zu messen.

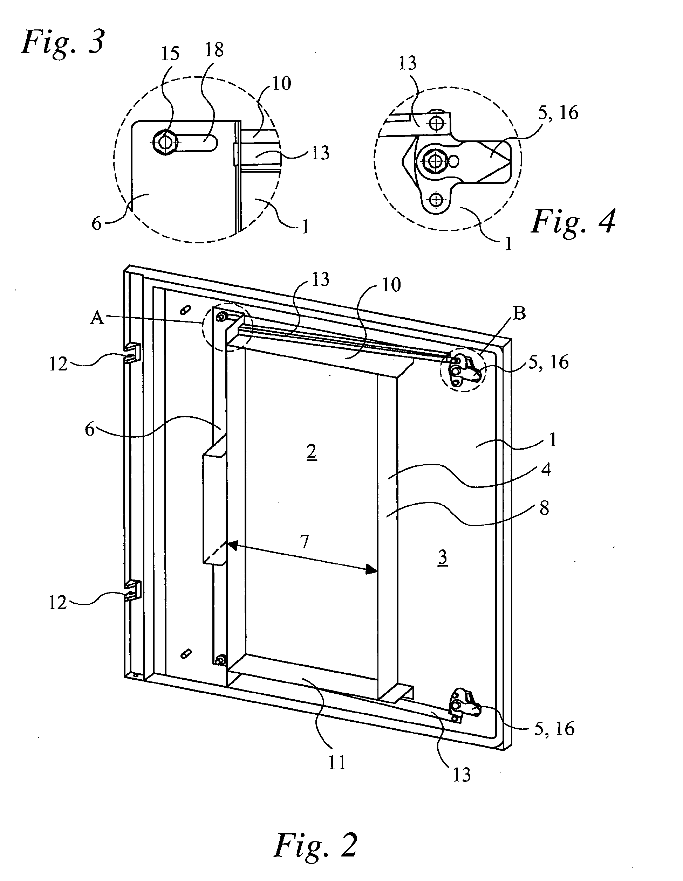

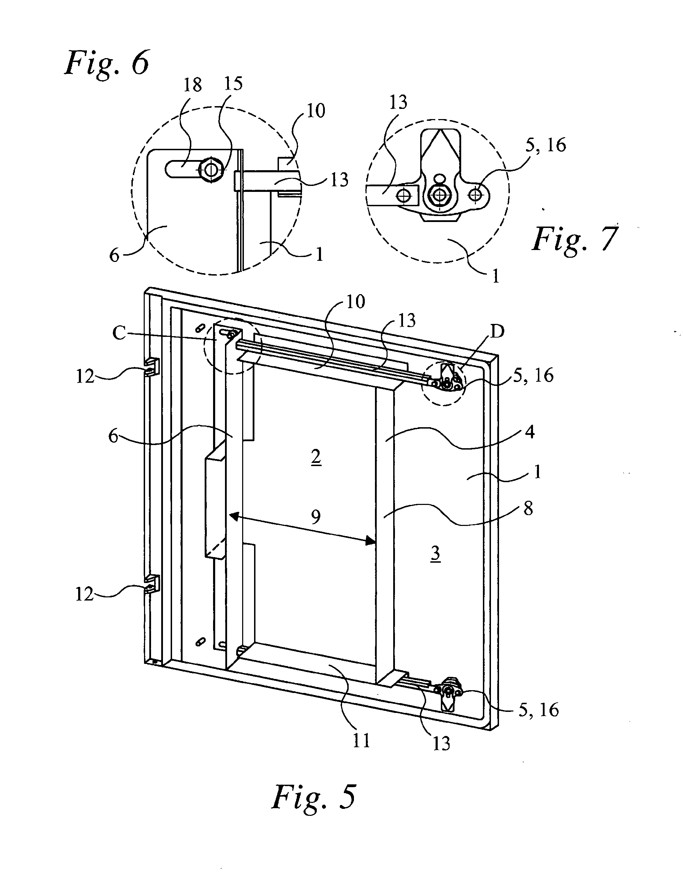

In den Fig. 2 und 5 ist der erste bzw. zweite Abstand 7, 9 eingezeichnet.

Bevorzugt weist der Rahmen 4 eine im Wesentlichen rechteckige Form auf, wie in den Fig. 1, 2 und 5 dargestellt. Die weitere Beschreibung ist auf einen derartigen rechteckigen Rahmen 4 gerichtet. Es können weitere Formen eines Rahmens 4 umfassend eine verschiebbare erste Rahmenwand 6, vorgesehen sein, auf welche die gegenständliche Erfindung sinngemäß angewandt werden kann. Dabei sind insbesondere regelmäßige bzw. unregelmäßige Polygone vorgesehen. Es können aber auch Rahmenformen mit Kurvenabschnitten, etwa in den Eckbereichen, bzw. vollständig kurvige Rahmen vorgesehen sein.

Bevorzugt ist vorgesehen, dass die zweite Rahmenwand 8 ortsfest an der Schaltschranktür 1 befestigt ist. Weiters ist bevorzugt vorgesehen, dass auch die dritte Rahmenwand 10 und die vierte Rahmenwand 11 jeweils ortsfest an der Schaltschranktür 1 befestigt sind. Die erste Rahmenwand 6 ist bevorzugt längsverschiebbar an der Schaltschranktür 1 gelagert. Wie gut in den Fig. 2, 3, 5 und Fig. 6 dargestellt, weist die erste Rahmenwand 6 Langlöcher 18 auf, und ist an - in der Schaltschranktür 1 angeordneten - Bolzen 15 geführt.

Alternativ kann vorgesehen sein, dass die erste Rahmenwand 6 verschiebbar an der dritten Rahmenwand 10 und/oder der vierten Rahmenwand 11, welche insbesondere im Wesentlichen normal auf die erste Rahmenwand 6 angeordnet sind, gelagert ist. Dadurch kann der Rahmen 4 vormontiert und als vollständige Baueinheit an der Schaltschranktür 1 befestigt werden.

Weiters kann alternativ zur dargestellten bevorzugten Ausführungsform vorgesehen sein, dass die dritte Rahmenwand 10 und/oder die vierte Rahmenwand 11 teleskopartige Verlängerungen aufweisen, welche mit der ersten Rahmenwand 6 verbunden sind. Dadurch kann auch bei geöffneter Schaltschranktür 1 ein im Umfang geschlossener Rahmen 4 gewährleistet werden.

Wie dargestellt, ist besonders bevorzugt vorgesehen, dass die erste Rahmenwand 6 in Richtung eines Scharniers 17 und/oder einer Scharnieraufnahme 12 verschiebbar ist. Dadurch kann eben in diesem Bereich eine Kollision zwischen Teilen des Rahmens 4 und Teilen des in der Position Ausgefahren angeordneten Schalters 14 vermieden werden.

Wie insbesondere in den Fig. 1 bis 7 dargestellt, ist bevorzugt vorgesehen, dass die erste Rahmenwand 6 mit einem Gestänge 13 mit dem Verriegelungsmechanismus 5 verbunden ist, zum Verschieben der ersten Rahmenwand 6 beim Verbringen des Verriegelungsmechanismus 5 von der Verriegelungsposition in die Öffnungsposition.

Eine Stange bzw. ein Gestänge 13 ist mit einem Ende an einem Drehriegel 16 befestigt und an einem anderen Ende an der ersten Rahmenwand 6. Dabei kann aufgrund der geringen Verkippung der Gestände 13 auf eine gelenkige Lagerung der einzelnen Gestände 13 an der ersten Rahmenwand 6 verzichtet werden.

## Patentansprüche

1. Schaltschranktür (1), welche eine Öffnung (2) aufweist, wobei die Öffnung (2) an einer Innenseite (3) der Schaltschranktür (1) von einem, aus Rahmenwänden (6, 8, 10, 11) gebildeten, Rahmen (4) umrandet ist, wobei die Schaltschranktür (1) weiters einen Verriegelungsmechanismus (5) aufweist, **dadurch gekennzeichnet, dass** bei Anordnung des Verriegelungsmechanismus (5) in einer Verriegelungsposition eine erste Rahmenwand (6) einen ersten Abstand (7) zu einer gegenüberliegend zu dieser angeordneten zweiten Rahmenwand (8) aufweist, dass bei Anordnung des Verriegelungsmechanismus (5) in einer Öffnungsposition die erste Rahmenwand (6) einen zweiten Abstand (9) zu der zweiten Rahmenwand (8) aufweist, und dass der zweite Abstand (9) größer ist als der erste Abstand (7).

2. Schaltschranktür (1) nach Anspruch 1, **dadurch gekennzeichnet, dass** die zweite Rahmenwand (8) ortsfest an der Schaltschranktür (1) befestigt ist.

3. Schaltschranktür (1) nach Anspruch 1 oder 2, **dadurch gekennzeichnet, dass** erste Rahmenwand (6) längsverschiebbar an der Schaltschranktür (1) gelagert ist.

4. Schaltschranktür (1) nach einem der Ansprüche 1 bis 3, **dadurch gekennzeichnet, dass** die erste Rahmenwand (6) verschiebbar an einer dritten und/oder vierten Rahmenwand (10, 11), welche im Wesentlichen normal auf die erste Rahmenwand (6) angeordnet sind, gelagert ist.

5. Schaltschranktür (1) nach Anspruch 4, **dadurch gekennzeichnet, dass** die dritte und/oder vierte Rahmenwand (10, 11) teleskopartige Verlängerungen aufweisen, welche mit der ersten Rahmenwand (6) verbunden sind.

6. Schaltschranktür (1) nach einem der Ansprüche 1 bis 5, **dadurch gekennzeichnet, dass** die erste Rahmenwand (6) in Richtung eines Scharniers (17) und/oder einer Scharnieraufnahme (12) verschiebbar ist.

7. Schaltschranktür (1) nach einem der Ansprüche 1 bis 6, **dadurch gekennzeichnet, dass** die erste Rahmenwand (6) mit einem Gestänge (13) mit dem Verriegelungsmechanismus (5) verbunden ist, zum Verschieben der ersten Rahmenwand (6) beim Verbringen des Verriegelungsmechanismus (5) von der Verriegelungsposition in die Öffnungsposition.

8. Schaltschrank mit einer Schaltschranktür (1) nach einem der Ansprüche 1 bis 7.

## Claims

1. Control cabinet door (1) having an opening (2), wherein the opening (2) is surrounded on an inner side (3) of the cabinet door (1) by a frame (4) formed by one of frame walls (6, 8, 10, 11), wherein the control cabinet door (1) further comprises a locking mechanism (5), **characterised in that** on arranging the locking mechanism (5) in a locking position, a first frame wall (6) has a first clearance (7) from a second frame wall (8) opposite to the former, wherein on arranging the locking mechanism (5) in an opening position, the first frame wall (6) has a second clearance (9) from the second frame wall (8), and wherein the second clearance (9) is greater than the first clearance (7).

2. Control cabinet door (1) according to claim 1, **characterised in that** the second frame wall (8) is fixedly secured to the control cabinet door (1).

3. Control cabinet door (1) according to claim 1 or 2, **characterised in that** the first frame wall (6) is mounted to be longitudinally displaceable with respect to the control cabinet door (1).

4. Control cabinet door (1) according to any one of the claims 1 to 3, **characterised in that** the first frame wall (6) is mounted to be slidable with respect to a third and/or fourth frame wall (10, 11), wherein the latter is arranged substantially normal to the first frame wall (6).

5. Control cabinet door (1) according to claim 4, **characterised in that** the third and/or fourth frame wall (10, 11) has telescopic extensions which are connected to the first frame wall (6).

6. Control cabinet door (1) according to any one of the claims 1 to 5, **characterised in that** the first frame wall (6) is slidable in the direction of a hinge (17) and/or a hinge seat (12).

7. Control cabinet door (1) according to any one of the claims 1 to 6, **characterised in that** the first frame wall (6) is connected to the locking mechanism (5) via a linkage (13) to allow displacement of the first frame wall (6) when the locking mechanism (5) passes from the locking position to the opening position.

8. Control cabinet with a cabinet door (1) according to any one of the claims 1 to 7.

## Revendications

1. Porte d'armoire de distribution (1), qui présente une ouverture (2), l'ouverture (2) étant encadrée, au niveau d'un côté intérieur (3) de la porte d'armoire de distribution (1), par un cadre (4) formé à partir de parois de cadre (6, 8, 10, 11), la porte d'armoire de distribution (1) présentant en outre un mécanisme de verrouillage (5), **caractérisée en ce qu'**une première paroi de cadre (6) présente une première distance (7) par rapport à une deuxième paroi de cadre (8) disposée de manière à faire face à ladite première paroi de cadre lorsque le mécanisme de verrouillage (5) est disposé dans une position de verrouillage, **en ce que** la première paroi de cadre (6) présente une deuxième distance (9) par rapport à la deuxième paroi de cadre (8) lorsque le mécanisme de verrouillage (5) est disposé dans une position d'ouverture, et **en ce que** la deuxième distance (9) est plus grande que la première distance (7).

2. Porte d'armoire de distribution (1) selon la revendication 1, **caractérisée en ce que** la deuxième paroi de cadre (8) est fixée de manière stationnaire au niveau de la porte d'armoire de distribution (1).

3. Porte d'armoire de distribution (1) selon la revendication 1 ou 2, **caractérisée en ce que** la première paroi de cadre (6) est montée de manière à pouvoir être déplacée par un coulissement longitudinal au niveau de la porte d'armoire de distribution (1).

4. Porte d'armoire de distribution (1) selon l'une quelconque des revendications 1 à 3, **caractérisée en ce que** la première paroi de cadre (6) est montée de manière à pouvoir être déplacée par coulissement au niveau d'une troisième et/ou d'une quatrième paroi de cadre (10, 11), qui sont disposées essentiellement de manière normale sur la première paroi de cadre (6).

5. Porte d'armoire de distribution (1) selon la revendication 4, **caractérisée en ce que** la troisième et/ou la quatrième paroi de cadre (10, 11) présentent des rallonges télescopiques, qui sont reliées à la première paroi de cadre (6).

6. Porte d'armoire de distribution (1) selon l'une quelconque des revendications 1 à 5, **caractérisée en ce que** la première paroi de cadre (6) peut être déplacée par coulissement en direction d'une charnière (17) et/ou en direction d'un logement de charnière (12).

7. Porte d'armoire de distribution (1) selon l'une quelconque des revendications 1 à 6, **caractérisée en ce que** la première paroi de cadre (6) est reliée par une tringlerie (13) au mécanisme de verrouillage (5), afin de déplacer par coulissement la première paroi de cadre (6) lorsque le mécanisme de verrouillage (5) est amené depuis la position de verrouillage dans la position d'ouverture.

8. Armoire de distribution comprenant une porte d'armoire de distribution (1) selon l'une quelconque des revendications 1 à 7.
